# FASCICULE DE BREVET EUROPEEN

(11) **EP 0 472 450 B1**
(45) Date de publication et mention de la délivrance du brevet: **27.12.1995**
(21) Numéro de dépôt: 91402140.7
(22) Date de dépôt: 30.07.1991
(51) Int. Cl.: A23B 7/05, A23L 3/37, A23L 3/36

(54) **Procédé et installation de traitement de produits surgelés**
Verfahren und Einrichtung zur Behandlung von tiefgefrorenen Waren
Process and apparatus for treatment of frozen products

(30) Priorité: 08.08.1990 FR 9010127
(43) Date de publication de la demande: 26.02.1992
(73) Titulaire: SOCIETE DE DEVELOPPEMENT DE L'INDUSTRIE, AGRO-ALIMENTAIRE ET DE PEPINIERE EUROPEEENE - SODIAPE, F-77167 Bagneaux sur Loing (FR)
(72) Inventeur: Bain, Jacques, F-76130 Mont-Saint-Aignan (FR)
(74) Mandataire: Derambure, Christian

(56) Documents cités:
- AU-B- 21 005
- FR-A- 2 267 053
- US-A- 3 607 313
- DERWENT FILE SUPPLIER JAPS, vol. 4, no. 135 (C-25)[617], 20 septembre 1980, Patent Office of Japan, Tokyo, JP;& JP-A-55 85 361 (TOSHIYUKI OOTA) 27-06-1980
- DERWENT FILE SUPPLIER WPI(L), accession no. 83-15745K [07], 1983, Derwent Publications Ltd, Londres, GB; & JP-A-58 000 863 (KATOKICHI) 06-01-1983
- DERWENT FILE SUPPLIER WPI(L), accession no. 83-59628K [25], 1983, Derwent Publications Ltd, Londres, GB; & JP-A-58 078 549 (KATOKICHI) 12-05-1983
- PATENT ABSTRACTS OF JAPAN, vol. 10, no. 136 (C-347) [2193], 20 mai 1986; & JP-A-60 262 559 (NIHON SEIFUN K.K.) 25-12-1985

## Description

L'invention concerne un procédé et une installation de traitement de produits surgelés.

On connaît déjà la technique de traitement de produits alimentaires surgelés. On peut se référer, par exemple, aux documents : FR-A-2 267 053 dans lequel est décrit un produit alimentaire surgelé enrobé dans un revêtement comportant de la pâte à frire ; JP-A-58 078 549 selon lequel le traitement consiste à immerger le produit alimentaire surgelé dans une émulsion à base de pâte à frire et de céréales.

Cependant dans le cas de produits alimentaires surgelés accompagnés de sauce, les techniques antérieures posent certains problèmes ou ont certaines limites. Ainsi, en pratique, quand la sauce est simplement introduite dans l'emballage contenant les aliments surgelés, sa surgélation a lieu en bloc, donnant au produit un aspect peu attractif pour le consommateur.

Pour remédier à cet inconvénient, il a été proposé des procédés de traitement de produits surgelés comprenant une étape de surgélation de type I.Q.F. et une étape d'enrobage des produits surgelés par une composition à base de chocolat (JP-A-5 585 361), ou de sauce aromatisée comprenant de l'eau (US-A-3 607 313 et JP-A-5 800 863).

Néanmoins, outre le fait que les qualités orgaloleptiques des produits ainsi traités sont affectés, en général les produits alimentaires surgelés par la technique connue sont utilisés en une seule fois ou alors sont fractionnés en doses distinctes. Ces produits à l'état surgelé se présentent le plus souvent sous la forme de blocs compacts, utilisés comme tels ce qui n'est pas un inconvénient. En conséquence, la technique connue n'est pas ou est mal adaptable au cas de produits alimentaires surgelés destinés au contraire à être utilisés sous forme de fractions non individualisées comme telles (à la manière des doses). Tel est le cas (par exemple) d'herbes aromatiques surgelées et présentées à la vente en paquets de 20 g à 1000 g chacun, les herbes étant ensuite utilisées par petites fractions (pincées ou petites cuillerées). En effet dans un tel exemple, il est indispensable que les produits surgelés ne forment pas des blocs compacts non fractionnables. Or on sait, par expérience, que pour ce genre de produits, il y a un risque sérieux de prise en masse du fait de la synérèse et de la surfusion de l'eau. Lors, par exemple, d'une rupture accidentelle de la chaîne du froid, il y a recristallisation de l'eau lors de la recongélation.

En conséquence, l'invention a pour but une technique (procédé et installation) de traitement de produits surgelés en morceaux en vue d'éviter la prise en masse de ceux-ci.

Notamment l'invention a pour but une technique (procédé et installation) de traitement de produits surgelés en morceaux de petites dimensions en vue d'éviter la prise en masse de ceux-ci.

L'invention a également pour but des produits alimentaires obtenus par la mise en oeuvre de cette technique.

L'invention a également pour but des produits alimentaires surgelés, en morceaux, pouvant être utilisés sous la forme de fractions prélevées d'une quantité plus importante de produits surgelés, ceux-ci restant à l'état surgelé.

L'invention a également pour but des produits alimentaires surgelés en morceaux restant individualisés même en cas de rupture de la chaîne du froid.

A cet effet, l'invention propose, d'abord, un procédé de traitement d'un produit surgelé, à savoir des herbes aromatiques ou des légumes en morceaux qui après l'étape de surgélation et alors que le produit est ou est maintenu substantiellement à l'état surgelé, comprend une étape dans laquelle on enrobe substantiellement les morceaux d'une composition d'enrobage dépourvue d'eau comprenant au moins une matière grasse. Selon la réalisation considérée, le produit concerné est un produit alimentaire, plus particulièrement végétal. La composition d'enrobage est donc elle-même de qualité alimentaire et consommable. Elle n'affecte pas substantiellement les qualités organoleptiques du produit traité. Cette composition d'enrobage est alors essentiellement d'origine végétale, notamment dépourvue d'eau et constituée dans un mode préféré de réalisation de l'ordre de 80 % en poids d'huile de tournesol et de l'ordre de 20 % en poids d'huile de palm.

Dans le procédé, on met en oeuvre une composition d'enrobage dont le ou les constituants, proportion, quantité, température sont sélectionnés en fonction du produit à traiter de manière que la composition puisse à une température d'enrobage être amenée à l'état liquide et être déposée dans cet état sur les morceaux du produit pour y constituer une pellicule d'enrobage ; être à l'état solide et suffisamment dure à toute température inférieure à de l'ordre de 0°C, donc pendant le conditionnement, et avoir une température de fusion de l'ordre de la température ambiante. De préférence, la proportion en poids de composition d'enrobage par rapport au produit à traiter est comprise entre 3% à 5%.

Dans la réalisation considérée, le procédé comprend la succession d'étapes suivantes :
- Une étape dans laquelle on enrobe substantiellement les morceaux d'une composition d'enrobage dépourvue d'eau comprenant principalement de la matière grasse. De préférence, on pulvérise la composition d'enrobage chaude et à l'état liquide sur les morceaux du produit à traiter sous agitation ;
- Une étape ultérieure de refroidissement des morceaux ainsi enrobés jusqu'à amener la composition dépourvue d'eau d'enrobage à l'état solide et suffisamment dure ;
- une étape finale ultérieure de conditionnement des morceaux du produit ainsi enrobés et surgelés.

L'invention concerne également des végétaux alimentaires surgelés, tels que des herbes aromatiques ou des légumes sous forme de morceaux comprenant sur et autour des morceaux un enrobage d'une composition dépourvue d'eau et constituée essentiellement d'une ou plusieurs matières grasses végétales se trouvant à l'état solide et suffisamment dure à toute température inférieure à de l'ordre de 0°C. De préférence, la proportion en poids de composition d'enrobage par rapport aux végétaux est comprise entre 3% à 5%.

L'invention concerne également une installation de traitement de produits surgelés comprenant, d'amont en aval :
- un dispositif de surgélation ;
- un dispositif d'enrobage tel qu'une turbine recevant les produits surgelés et incluant des buses de pulvérisation, associés via des conduits de liaison à un dispositif de chauffage recevant une amenée de composition d'enrobage.

Selon d'autres caractéristiques, cette installation comprend, en outre, un dispositif de refroidissement interposé entre la turbine et la machine de conditionnement. La turbine et le dispositif de refroidissement sont placés dans une enceinte à faible température.

Ces buts et bien d'autres, ainsi que les avantages, les caractéristiques et les variantes de l'invention résulteront de la description qui suivra de plusieurs formes de réalisation, ainsi que les deux figures annexées à savoir :

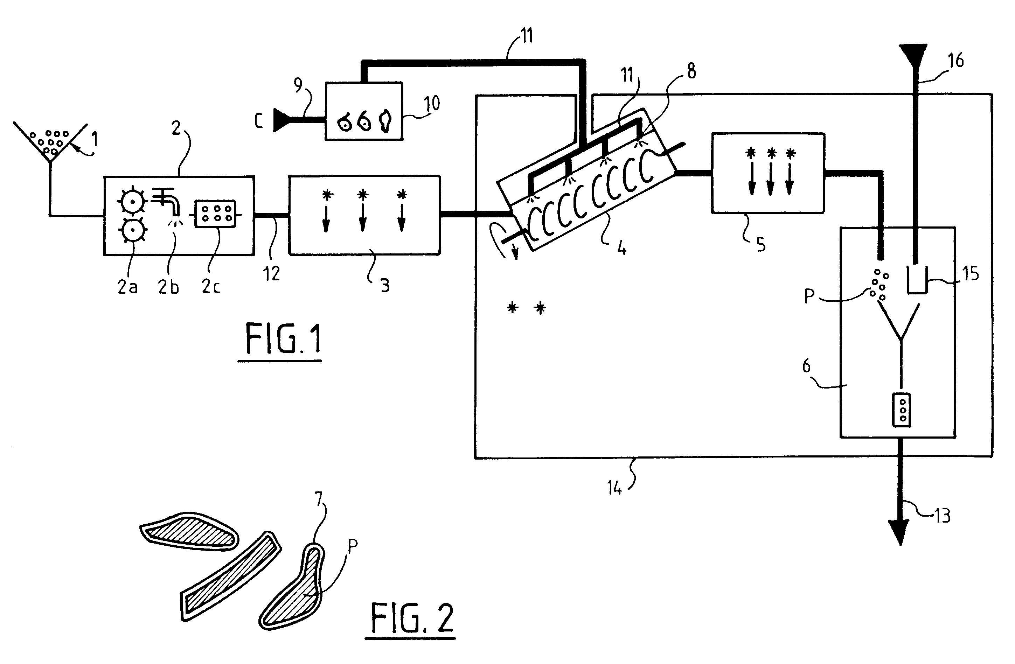

- la figure 1 qui est un bloc diagramme fonctionnel illustrant le procédé selon l'invention ainsi qu'une installation pour sa mise en oeuvre.
- la figure 2 qui est une vue schématique en coupe du produit surgelé traité selon l'invention.

L'invention se réfère au traitement des produits surgelés P se présentant sous la forme de morceaux. Dans la réalisation considérée, décrite en détail, les produits P sont des végétaux alimentaires tels que des herbes aromatiques (thym, persil) ou des légumes (oignon). Les morceaux considérés proviennent soit d'une coupe, déchiquetage, parage ou autre opération de préparation du même type (herbes aromatiques), soit de l'unité structurelle du produit même (oignon). Les morceaux de produit P peuvent avoir une taille de l'ordre du ou inférieure au millimètre et jusqu'à de l'ordre du centimètre ou plus. Ces morceaux peuvent avoir une forme générale filiforme, ou de bande ou lanière, ou massive par exemple sphérique ou autre.

Le procédé comprend les étapes successives suivantes, mises en oeuvre au moyen d'une installation appropriée :
a) une étape de préparation des végétaux P provenant d'une alimentation en végétaux 1 (trémie, bac, tapis transporteur). Cette étape met en oeuvre un ou plusieurs dispositifs 2 pouvant inclure des moyens de coupe, déchiquetage, parage 2a, des moyens de lavage 2b et des moyens d'essorage 2c. Ces moyens 2a, 2b, 2c fonctionnent par exemple en continu.
b) une étape de surgélation des végétaux ainsi préparés au moyen, par exemple, d'un tunnel de surgélation 3 fonctionnant en continu.
c) une étape d'enrobage des morceaux de végétaux P d'une composition d'enrobage C dépourvue d'eau et comprenant au moins une, notamment comprenant principalement, et - en variante - constituée essentiellement, d'au moins une, ou un mélange ou association de plusieurs, matière grasse. Cette étape peut être mise en oeuvre, ainsi qu'on le verra au moyen d'une turbine 4 du type des turbines à dragéifier, bien connues en soi dans l'industrie agro-alimentaire.
d) une étape de refroidissement des morceaux de végétaux P ainsi enrobés jusqu'à amener la composition d'enrobage C dépourvue d'eau à l'état solide et suffisamment dure. Cette étape peut être mise en oeuvre au moyen d'un tunnel de refroidissement 5.
e) une étape finale ultérieure de conditionnement des morceaux de végétaux P ainsi enrobés et surgelés au moyen d'une machine de conditionnement 6 convenable.

On met en oeuvre une composition d'enrobage dont le ou les constituants, proportion, quantité, température sont sélectionnés en fonction du produit à traiter de manière que la composition puisse à une température d'enrobage être amenée à l'état liquide et être déposée dans cet état sur les morceaux du produit pour y constituer une pellicule d'enrobage ; être à l'état solide et suffisamment dure à toute température inférieure à de l'ordre de 0°C, donc pendant le conditionnement, et avoir une température de fusion de l'ordre de la température ambiante.

Ainsi, dans la réalisation considérée, on met en oeuvre, comme composition d'enrobage, un mélange de matières grasses comprenant principalement de l'huile de tournesol en proportion en poids d'au moins 50% ; ou un mélange d'huile de tournesol et d'huile de palme, notamment de 70% à 90% en poids d'huile de tournesol et de 10% à 30% en poids d'huile de palme. Ainsi, dans la réalisation considérée et décrite, on met en oeuvre comme composition d'enrobage C dépourvue d'eau une ou un mélange de plusieurs matières végétales. En particulier, la composition d'enrobage est constituée essentiellement de l'ordre de 80% en poids d'huile de tournesol et de l'ordre de 20 % en poids d'huile de palme. En variante, la (ou les) matière(s) grasse(s) est (sont) d'origine animale.

La température d'enrobage - c'est-à-dire la température à laquelle la composition d'enrobage est déposée sur les morceaux de végétaux P pour former, sur et autour d'eux, une pellicule 7 de cette composition C - est de 85°C à 100°C. La température de fusion de la composition d'enrobage est de l'ordre de 20°C.

La proportion en poids de composition d'enrobage par rapport au produit traité et incluant donc la composition C est comprise entre 3% à 5%.

L'étape d'enrobage des morceaux de végétaux P est réalisée alors que ceux-ci sont ou sont maintenus substantiellement à l'état surgelé, à une température de l'ordre ou inférieure à -18°C. Cet enrobage concerne substantiellement toute la surface extérieure des morceaux de végétaux P de manière que ces morceaux soient totalement ou presque totalement inclus dans la pellicule de protection 7 qui les entoure.

L'étape d'enrobage proprement dite consiste à pulvériser sous pression la composition d'enrobage chauffée jusqu'à l'état liquide (ou suffisamment liquide) sur les morceaux de végétaux P convenablement agités. Cette pulvérisation est réalisée mécaniquement à travers une ou des buses de pulvérisation 8 branchée(s) sur une amenée 9 de composition C sous pression, via un dispositif de chauffage 10 et des conduits de liaison appropriés 11.

Dans la réalisation considérée, l'étape d'enrobage est réalisée en continu, comme les autres étapes. Selon une autre réalisation possible l'étape d'enrobage est réalisée en discontinu, par lots de produits P.

L'installation pour la mise en oeuvre du procédé comprend des convoyeurs 12 formant une ligne continue allant d'amont où se trouve l'alimentation 1 en végétaux en aval qui est la sortie 13 de la machine 6. Sur cette ligne sont placés d'amont en aval le ou les dispositifs 2, 2a, 2b, 2c, le tunnel de surgélation 3, la turbine 4 ou équivalent, le tunnel de refroidissement 5, la machine de conditionnement 6.

Toutefois, le procédé et l'installation peuvent comporter également, respectivement, des étapes ou moyens complémentaires tels que broyage ou autre. Le conditionnement (et la machine 6) peut comprendre aussi des étapes ou moyens complémentaires tels que ensachage, fardelage, regroupement, palettisation, houssage, stockage.

Dans la réalisation considérée, la turbine 4, le tunnel 5 et la machine de conditionnement 6 (ainsi que les éventuels moyens complémentaires précédemment mentionnés) sont localisés dans une enceinte 14 à faible température apte à maintenir les végétaux P en cours de traitement à l'état surgelé.

Une telle enceinte 14, telle qu'une enceinte réfrigérée, comprend des passages pour les matières ou éléments consommables à savoir et outre les végétaux P, la composition C et les paquets 15 destinés à la machine 6. Ces paquets 15 (déjà formés ou à former) arrivent à la machine par une alimentation en paquets 16. En ce qui concerne les conduits de liaison 11 et dans la mesure où la composition C arrive chaude dans la turbine 4, il est prévu un calorifugeage approprié.

Le tunnel de surgélation 3 est du type et fonctionne selon le mode I.Q.F.. (Individual Quick Freezing ou surgélation individuelle rapide).

L'installation comprend également les moyens de commande de mesure et de contrôle habituels pour ce type d'installation. Ceux-ci peuvent inclure un ou des automates programmables programmés selon plusieurs séquences ou cycles de fonctionnement adapté à chacun des végétaux P.

Le procédé et l'installation peuvent, également, être mis en oeuvre avec plusieurs végétaux P traités simultanément et mélangés.

L'invention concerne également les produits surgelés tels qu'obtenus par la mise en oeuvre du procédé ou de l'installation. Ces produits sont, dans la réalisation considérée, des herbes aromatiques ou de légumes, ainsi qu'il a été déjà mentionné. De tels végétaux, en morceaux, comprennent sur et autour des morceaux un enrobage dépourvu d'eau d'une composition constituée essentiellement d'une ou plusieurs matières grasses végétales se trouvant à l'état solide et suffisamment dure à toute température inférieure à de l'ordre de 0°C, la proportion en poids de composition d'enrobage par rapport aux végétaux enrobés étant comprise entre 3% à 5%. La quantité de composition C par rapport à celle des végétaux P est déterminée ainsi qu'il a été mentionné afin que la composition C formant la pellicule 7 puisse jouer sa fonction consistant à empêcher ou ralentir la prise en masse des végétaux P congelés du fait, notamment des variations de température de végétaux P lors du stockage, celui-ci pouvant être et étant le plus souvent de longue durée.

## Revendications

1. Procédé de traitement de végétaux alimentaires surgelés à savoir des herbes aromatiques ou des légumes sous forme de morceaux comprenant les étapes successives suivantes :
= Préparation et surgélation individuelle rapide de végétaux ; maintien de l'état surgelé sans rupture de la chaîne de froid ;
= Enrobage des morceaux de végétaux avec une composition d'enrobage de qualité alimentaire et consommable dépourvue d'eau et constituée essentiellement d'une ou d'un mélange de plusieurs matière(s) grasse(s) végétale(s), préalablement amenée(s) à l'état liquide par chauffage, sélectionnée(s) pour que la composition d'enrobage soit à l'état solide à une température inférieure à de l'ordre de 0°C et ait une température de fusion de l'ordre de la température ambiante et n'affecte pas sensiblement les qualités organoleptiques des végétaux traités ;
= Refroidissement des morceaux de végétaux ainsi enrobés pour durcir la composition d'enrobage ;
= Conditionnement et stockage des morceaux de végétaux ainsi enrobés et surgelés.

2. Procédé selon la revendication 1 caractérisé par le fait que l'on met en oeuvre comme composition d'enrobage un mélange de matières grasses comprenant principalement de l'huile de tournesol en proportion en poids d'au moins 50%.

3. Procédé selon la revendication 1 caractérisé par le fait que l'on met en oeuvre comme composition d'enrobage un mélange de matières grasses comprenant de l'huile de tournesol et de l'huile de palme.

4. Procédé selon la revendication 3 caractérisé par le fait que l'on met en oeuvre comme composition d'enrobage un mélange de matières grasses comprenant de 70% à 90% en poids d'huile de tournesol et de 10% à 30% en poids d'huile de palme.

5. Procédé selon la revendication 4 caractérisé par le fait que l'on met en oeuvre une composition d'enrobage constituée essentiellement de l'ordre de 80% en poids d'huile de tournesol et de l'ordre de 20% en poids d'huile de palme.

6. Procédé selon la revendication 1 caractérisé par le fait que la température d'enrobage de la composition d'enrobage est de 85°C à 100°C.

7. Procédé selon la revendication 1 caractérisé par le fait que la température de fusion de la composition d'enrobage est de 20°C.

8. Procédé selon la revendication 1 caractérisé par le fait que la proportion en poids de composition d'enrobage par rapport aux produits végétaux traités est comprise entre 3% à 5%.

9. Procédé selon la revendication 1 caractérisé par le fait que pour enrober les morceaux de végétaux de la composition d'enrobage, on pulvérise la composition d'enrobage chaude et à l'état liquide sur les morceaux de végétaux à traiter sous agitation.

10. Procédé selon la revendication 9 caractérisé par le fait que l'on réalise la pulvérisation de l'étape d'enrobage en continu.

11. Procédé selon la revendication 9 caractérisé par le fait que l'on réalise la pulvérisation de l'étape d'enrobage en discontinu, par lots.

12. Installation de traitement de végétaux alimentaires surgelés pour la mise en oeuvre du procédé selon l'une quelconque des revendications 1 à 11 comprenant, d'amont en aval :
- Un dispositif de surgélation individuelle rapide (3) ;
- Une turbine d'enrobage (4) recevant les morceaux de végétaux surgelés P et incluant des buses de pulvérisation (8), associées via des conduits de liaison (11) à un dispositif de chauffage (10) recevant une amenée (9) de la composition d'enrobage (C) ;
- Un dispositif de refroidissement (5) ;
- Une machine de conditionnement (6) ;
le dispositif de refroidissement (5) étant placé dans une enceinte (14) à faible température, apte à maintenir les végétaux en cours de traitement à l'état surgelé.

## Claims

1. A process for treating frozen alimentary vegetable, i.e. aromatic herbs or vegetables in the form of pieces, comprising the following successive steps:
= Quick individual preparation and freezing of the vegetables; maintaining them in frozen state without interrupting the cold chain;
= Coating the pieces of vegetables with a coating composition of alimentary quality and consumable, free from water and mainly made up of vegetable fat or a mixture of vegetable fats previously brought to liquid state by heating, selected so that the coating composition is in liquid state at a temperature below approximately 0°C, its melting temperature is approximately equal to the ambient temperature, and it does not significantly affect the organoleptic qualities of the vegetables treated;
= Cooling the pieces of vegetables thus coated so as to harden the coating composition;
= Packaging and storing the pieces of vegetables thus coated and frozen.

2. A process according to claim 1 characterised in that a mixture of vegetable fats mainly comprising sunflower seed oil in a proportion by weight of at least 50% is used as the coating composition.

3. A process according to claim 1 characterised in that a mixture of vegetable fats comprising sunflower seed oil and palm oil is used as the coating composition.

4. A process according to claim 3 characterised in that a mixture of vegetable fats comprising 70 to 90% in weight of sunflower seed oil and 10 to 30% in weight of palm oil is used as the coating composition.

5. A process according to claim 4 characterised in that a mixture of vegetable fats mainly made up of approximately 80% in weight of sunflower seed oil and approximately 20% in weight of palm oil is used as the coating composition.

6. A process according to claim 1 characterised in that the coating temperature of the coating composition is 85 to 100°C.

7. A process according to claim 1 characterised in that the melting temperature of the coating composition is 20°C.

8. A process according to claim 1 characterised in that the proportion by weight of the coating composition with respect to the vegetable products treated is 3 to 5%.

9. A process according to claim 1 characterised in that in order to coat the pieces of vegetables with the coating composition, the coating composition is sprayed, hot and in liquid state, onto the pieces of vegetables to be treated with the latter being agitated.

10. A process according to claim 9 characterised in that the spraying of the coating step is performed continuously.

11. A process according to claim 9 characterised in that the spraying of the coating step is performed discontinuously, in batches.

12. A frozen alimentary vegetables treatment installation for carrying out the process according to any of claims 1 to 11 comprising, upstream to downstream:
- a quick individual freezing device (3);
- a coating turbine (4) receiving the pieces of frozen vegetables P and including spraying nozzles (8) associated, via connecting pipes (11), to a heating device (10) receiving a supply (9) of coating composition (C);
- a cooling device (5);
- a packaging machine (6);
the cooling device (5) being placed inside a cell (14) at low temperature suited to maintain the vegetables being treated in frozen state.

## Patentansprüche

1. Verfahren zur Bearbeitung von tiefgefrorenen Speisevegetalien, d.h., aromatischen Kräutern oder Gemüse in Stückform mit folgenden aufeinanderfolgenden Stufen :
= Einzelne, schnelle Vorbereitung und Tiefgefrierung der Vegetalien; Beibehaltung des Tieffrierzustandes ohne Unterbrechung der Kältekette ;
= Überzug der Vegetalienstücke mit einer für Nahrungsmittel geeigneten und verzehrbaren Überzugmischung ohne Wassergehalt, bestehend im Wesentlichen aus einem oder einer Mischung aus mehreren vegetalen Fettstoff(en), der (die) zuvor durch Erhitzung verflüssigt wurde(n), und derart gewählt, daß der Überzug oder die Überzugmischung sich bei Temperaturen unter 0° C in festem Zustand befindet und einen Schmelzpunkt bei normaler Umgebungstemperatur aufweist, wobei sie nicht spürbar die organoleptischen Eigenschaften der behandelten Vegetalien beeinflußt ;
= Abkühlung der so überzogenen Vegetalienstücke damit der Überzug gehärtet wird;
= Verpackung und Lagerung der derart überzogenen und tiefgekühlten Vegatalienstücke.

2. Verfahren nach Anspruch 1, dadurch gekennzeichnet, daß als Überzugmischung eine Fettstoffmischung eingesetzt wird, die hauptsächlich aus Sonnenblumenöl im Gewichtsverhältnis von mindestens 50 % besteht.

3. Verfahren nach Anspruch 1, dadurch gekennzeichnet, daß als Überzugmischung eine Fettstoffmischung aus Sonnenblumenöl und Palmöl verwendet wird;

4. Verfahren nach Anspruch 3, dadurch gekennzeichnet, daß als Überzugmischung eine Fettstoffmischung mit 70% bis 90% Gewischtsanteilen Sonnenblumenöl und 10% bis 30% Gewichtsanteilen Palmöl verwendet wird.

5. Verfahren nach Anspruch 4, dadurch gekennzeichnet, daß als Überzugsmischung eine Mischung verwendet wird, die im Wesentlichen aus 80% Gewichtsanteilen Sonnenblumenöl und 20% Gewichtsanteilen Palmöl besteht.

6. Verfahren nach Anspruch 1, dadurch gekennzeichnet, daß die Überzugtemperatur für die Überzugmischung bei 85°C bis 100°C liegt.

7. Verfahren nach Anspruch 1, dadurch gekennzeichnet, daß der Schmelzpunkt der Überzugmischung bei 20°C liegt.

8. Verfahren nach Anspruch 1, dadurch gekennzeichnet, daß der Gewichtsanteil der Überzugmischung im Verhältnis zu den bearbeiteten Vegetalien zwischen 3% und 5% liegt.

9. Verfahren nach Anspruch 1, dadurch gekennzeichnet, daß zum Überzug der bearbeiteten Vegetalien mit der Überzugsmischung diese Überzugsmischung im heißen und flüssigen Zustand auf die dauernd gerührten zu bearbeitenden Vegetalienstücke aufgesprüht wird.

10. Verfahren nach Anspruch 9, dadurch gekennzeichnet, daß der Aufsprühvorgang der Überzugmischung kontinuierlich erfolgt.

11. Verfahren nach Anspruch 9, dadurch gekennzeichnet, daß der Aufsprühvorgang des Überzuges losweise mit Unterbrechungen erfolgt.

12. Anlage zur Bearbeitung von tiefgefrorenen Nahrungsmittelvegetalien zwecks Einsatz des Verfahrens, gemäß eines der Patentansprüche 1 bis 11, umfassend oberhalb und unterhalb :
- Eine Vorrichtung zum einzelnen, schnellen Tieffrieren (3)
- Eine Überzugturbine (4), die die tiefgefrorenen Vegetalien P aufnimmt und die die Sprühdüsen 8) enthält, welche über Verbindungsleitungen (11) mit einer Heizvorrichtung (10) verbunden sind, die ihrerseits eine Einspeisungsvorrichtung (9) für die Überzugmischung (C) enthält;
- Eine Abkühlvorrichtung (5)
- Eine Verpackungsmaschine (6)
- Eine Abkühlvorrichtung (5) in einem begrenzeten Raum (14) mit geringer Temperatur zur Erhaltung der Vegetalien, während der Bearbeitung, in tiefgekühltem Zustand.
